# EUROPEAN PATENT SPECIFICATION

(11) **EP 4 589 881 B1**
(45) Date of publication and mention of the grant of the patent: **10.12.2025**
(21) Application number: 24152432.1
(22) Date of filing: 17.01.2024
(51) Int. Cl.: H04L 9/32, H04L 9/00

(54) **METHOD AND SYSTEM FOR COUPLING A FIRST DATA SEQUENCE AND A SECOND DATA SEQUENCE TO EACH OTHER, AND METHOD AND DEVICE FOR VALIDATING THE FIRST AND SECOND DATA SEQUENCES AS BEING COUPLED**
VERFAHREN UND SYSTEM ZUR KOPPLUNG EINER ERSTEN DATENSEQUENZ UND EINER ZWEITEN DATENSEQUENZ SOWIE VERFAHREN UND VORRICHTUNG ZUR VALIDIERUNG DER KOPPLUNG VON DEN ERSTEN UND ZWEITEN DATENSEQUENZEN
PROCÉDÉ ET SYSTÈME POUR COUPLER UNE PREMIÈRE SÉQUENCE DE DONNÉES À UNE SECONDE SÉQUENCE DE DONNÉES, ET PROCÉDÉ ET SYSTÈME POUR VALIDER LE FAIT QU'UNE PREMIÈRE SÉQUENCE DE DONNÉES ET UNE SECONDE SÉQUENCE DE DONNÉES SONT COUPLÉES

(43) Date of publication of application: 23.07.2025
(73) Proprietor: Axis AB, 223 69 Lund (SE)
(72) Inventor: Keskikangas, Axel, 223 69 Lund (SE); Völcker, Björn, 223 69 Lund (SE)
(74) Representative: AWA Sweden AB

(56) References cited:
- WO-A1-2023/004159
- CN-A- 115 123 110
- JP-A- 2010 251 877

## Description

### Technical field

The present invention relates to a method and a system for coupling a first data sequence and a second data sequence to each other, and to a method and a device for validating the first and second data sequences as being coupled to each other. Especially, the present invention relates to coupling temporally related data sequences to each other, and to validating such data sequences as being coupled.

### Background

During surveillance of a scene using a video surveillance system, a plurality of data sequences comprising data relating to the monitored scene are generated. The data sequences may be generated by one or more cameras and/or by one or more microphone devices being comprised in the video surveillance system and being configured to capture video and/or sound from the scene. Thus, a data sequence may be a video sequence comprising video data with images of the scene, an audio sequence comprising audio data with sound emanating from the scene or from its surroundings, or a metadata sequence comprising metadata with information relating to the scene. Each one of the data sequences are captured during a respective time period, and the time period of two or more data sequences may be at least partly overlapping resulting in that at least two data sequences are temporally related to each other.

In case of an incident, such as a crime, or an accident, such as a car crash, in the monitored scene, it may be useful to investigate recorded data sequences which were generated at the time of the incident/accident to conclude what happened in the scene just before, at, and after the time of the incident/accident. However, when the data sequences are generated by different parts of the surveillance system it cannot be guaranteed that the data sequences asserted to be captured at the time of the incident/accident were captured at that time. Thus, audio data of an audio data sequence stated to be captured at the same time as video data of a video data sequence may not at all be reflecting sound from the scene at the time of the capturing of the video data. For example, the audio data sequence may have been tampered with to change the time for its recording from an actual, true, time to another false time. Consequently, it cannot be guaranteed that two data sequences generated by two different parts in the surveillance system and asserted to be captured at the same time were captured at that same time. Thus, it cannot be guaranteed that the two data sequences are temporally related. Further, it cannot be guaranteed that a data sequence generated by one part of the surveillance system and temporally related to another data sequence generated by another part will be noticed as missing if only the another data sequence is provided as for instance evidence in an investigation of an incident/accident. Thus, if a data sequence only comprising video data (without sound) is provided as evidence, and not a temporally related data sequence comprising audio data, that would not be detectable and therefore it would not be detectable that captured sound from the incident/accident (that is comprised in the temporally related data sequence comprising audio data) is missing.

Digital signature schemes for digitally signing data sequences are known. By digitally signing the data sequences, the authenticity of the data sequences can be verified. Still, when data sequences from one and the same monitored or captured scene are to be used as evidence, it may not suffice to show that the data sequences each are authentic in isolation. It may also be necessary to show that the data sequences were captured in one and the same location at the same time. There is thus a need for convenient and secure methods of coupling temporally related data sequences to each other in a way that makes it possible to show that the data sequences are authentic and originate from one and the same captured scene and were captured during at least partly overlapping time periods.

JP 2010 251877 A discloses a technique for generating a signature from hierarchically encoded data and for verifying the generated signature. CN 115 123 110 A discloses a system for monitoring interior space of passenger compartment and for allowing a vehicle to be started when a correct camera has been identified in the vehicle.

### Summary of the invention

In view of the above, it is thus an object of the present invention to mitigate drawbacks with the prior art and to provide techniques for coupling a first data sequence and a second data sequence temporally related to each other to enable validation of the first data sequence and the second data sequence as being coupled according to a method claim 1 or system claim 9. Another object is to provide techniques for validating a first data sequence and a second data sequence as being coupled to each according to method claim 6 or system claim 13.

By incorporating the first secret number in the first data sequence and by incorporating the first digest in the second data sequence, the first and second data sequences are coupled to each other. If only one of the data sequences is received by a receiver, the receiver may from the first secret number or the first digest included in the received data sequence conclude that the received data sequence may be coupled to another data sequence, i.e., that it could be/is temporally related to another data sequence, and that this another data sequence is missing or at least not yet received by the receiver, e.g. unintentionally due to a delay or an interruption caused by a network congestion or intentionally due to a pause in the transmission. Further, if both the first and second data sequences are received, the receiver can use the received first secret number and the received first digest (generated based on the first secret number) to validate that the first and second data sequences are coupled to each other, and thus related to each other in time. If the receiver would receive the first data sequence and another data sequence asserted to be coupled to the first data sequence but comprising another digest not generated based on the first secret number or not generated using the correct cryptographic one-way function, the receiver would not be able to validate the data sequences as being coupled and thus the receiver would understand that the assertion is incorrect.

By incorporating the first digital signature in the first data sequence and by incorporating the second digital signature in the second data sequence, the first and second data sequences can be authenticated independently of each other. Thus, if only the first data sequence is available, it can be authenticated without requiring presence of the second data sequence. Therefore, the first data sequence could, after verification of its authenticity, be used as evidence even if the temporally related second data sequence is unavailable. The same is true for the second data sequence if the first data sequence is missing.

By the term "coupling" when used herein should be understood as providing the data sequences with a respective link that can be used as an indication of a possible existence of a temporally related data sequence and for validating that two data sequences are temporally related. The first secret number provided to the first data sequence is an example of a first link indicating a possible existence of a temporally related data sequence, and the first digest provided to the second data sequence is an example of a second link indicating a possible existence of a temporally related data sequence. The reason for this is that the first processing device and the second processing device are set up to synchronously in time generate a respective same first secret number. Then the first processing device includes its first secret number in the first data sequence, and the second processing device generates a first digest based on its first secret number and includes the first digest in the second data sequence. If only one data sequence provided with a link (i.e., a secret number/digest) is available to a receiver, the presence of the link in the data sequence will indicate to the receiver that a temporally related data sequence may exist. This means that if for instance a video data sequence provided with a link is received, the receiver could conclude that a temporally related data sequence may exist and that it is missing for some reason. This temporally related data sequence could be an audio data sequence, another video data sequence, or a metadata sequence captured by another part of the surveillance system during a time period that is at least partly overlapping with the time period of the capturing of the video data sequence received. Further, the first and second links may be used to verify whether or not the first data sequence and second data sequence are temporally related. Thus, two data sequences are coupled to each other and consequently temporally related to each other, when their respective link verifies them as being coupled. Such two data sequences could also be said to be connected or linked to each other.

By the expression "data sequence" when used herein should be understood as a sequence or stream of data, wherein the data could be image data, video data, audio data, or metadata, just to give some examples. Other examples are radar data, lidar data and sonar data. Sometimes the data sequence comprises one type of data, but it could also comprise a combination of several types of data. For example, one data sequence may comprise only video data or only metadata, but one data sequence may also comprise both video data and metadata. The expressions "first data" and "second data" refer to the data comprised in the first data sequence and the second data sequence, respectively.

By the expression "temporally related" or similar expressions when used herein should be understood as the two or more data sequences are related to each other in time and thus are recorded, collected or created during time periods that are at least partly overlapping. In other words, if a first data sequence was captured during a first time period that is at least partly overlapping with a second time period during which a second data sequence was captured, the first and second data sequences are said to be temporally related.

By the term "digest" when used in this disclosure should be understood as an output resulting from a cryptographic one-way function applied to an input. The cryptographic one-way function may also be referred to as a cryptographic digest algorithm. For example, a first digest may be obtained by applying a cryptographic one-way function to a first secret number. In other words, the first digest could be said to be generated based on the first secret number. The cryptographic digest algorithm may be a cryptographic hash algorithm. The use of cryptographic hash algorithms to hash data is a well-known way of creating digests. A digest may also be referred to as a hash digest, a hash, a (digital) fingerprint, a message digest, a checksum just to give some examples. Consequently, the terms digest, hash digest, hash, (digital) fingerprint, message digest and checksum may be used interchangeably.

Embodiments of the invention are defined in the dependent claims. It is further noted that the invention relates to all possible combinations of features disclosed herein unless explicitly stated otherwise. Hence, it is to be understood that this invention is not limited to the particular components of the system and device described or steps of the methods described as such system, device and method may vary. It is also to be understood that the terminology used herein is for purpose of describing particular embodiments only and is not intended to be limiting. It must be noted that, as used in the specification and the appended claim, the articles "a", "an", "the", and "said" are intended to mean that there are one or more of the elements unless the context clearly dictates otherwise. Thus, for example, a reference to "an object" or "the object" may include several objects, and the like. Furthermore, the word "comprising" does not exclude other elements or steps.

### Brief description of the drawings

The invention will be described in more detail by way of examples and with reference to the accompanying schematic drawings, in which:
Fig. 1 schematically shows an exemplary environment in which embodiments may be implemented.
Fig. 2 schematically illustrates a surveillance system according to embodiments.
Fig. 3A is a flowchart of a method for coupling a first data sequence and a second data sequence temporally related to each other according to embodiments.
Fig. 3B schematically illustrates an exemplary first data sequence and the generation of first digital signatures.
Fig. 4 is a flowchart of a method for validating a first data sequence and a second data sequence as being coupled to each other according to embodiments.
Fig. 5 schematically illustrates a coupling system for coupling a first data sequence and a second data sequence temporally related to each other according to embodiments.
Fig. 6 schematically illustrates a validating device for validating a first data sequence and a second data sequence as being coupled to each other according to embodiments.

### Detailed description of embodiments

The present invention will be described more fully hereinafter with reference to the accompanying drawings, in which embodiments of the invention are shown and in which the same reference numerals are used for similar elements.

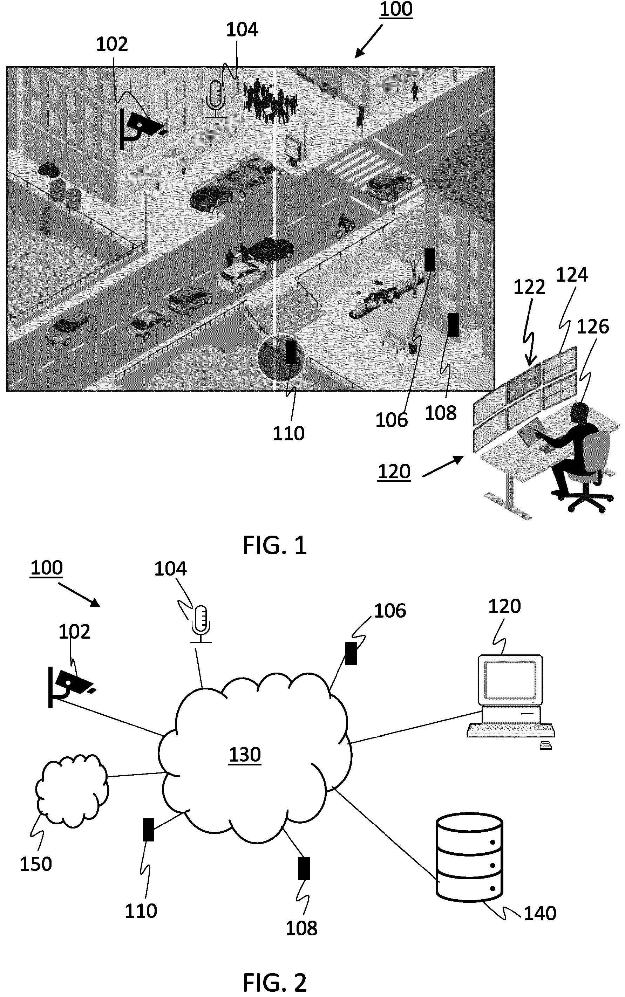

**Figure 1** shows an exemplary environment in which various embodiments of the invention can be implemented. As illustrated the exemplary environment is a city part comprising a river, a road crossing over the river, a parking place, buildings, pavements, a staircase and a lawn with a tree. Further, a car crash, a wrongly parked car, a crowd, and a fluid leaking into the river are illustrated. Figure 1 also shows **a surveillance system 100** comprising a number of devices. For instance, the surveillance system 100 may comprise **a surveillance camera 102, a microphone device 104, a fire sensor 106, a door station 108** and/or **a fluid sensor 110** just to give some examples. Other examples of devices that may be comprised in the surveillance system are radar, lidar, sonar, and/or GPS devices configured to provide radar data (e.g., a radar point cloud), lidar data (e.g., a lidar point cloud), sonar data and/or analytics metadata. It should be understood that several of the devices comprised in the surveillance system 100 may be integrated into a single unit. For example, a microphone device may be integrated into the surveillance camera 102, and the door station 108 may comprise a camera, a microphone device, and a loudspeaker. The surveillance system 100 may also comprise or be connected to **a client 120** such as a video management system. In Figure 1, the client 120 is illustrated to comprise **a monitoring station 122** with a plurality of **display devices 124** presenting a respective data sequence, e.g., a respective video data sequence of a monitored scene. **An operator 126** of the monitoring station 122 is also illustrated.

Each of the one or more devices comprised in the surveillance system 100 is configured to perform monitoring within the environment, and thus to monitor objects and events occurring in the environment. For example, the surveillance camera 102 is configured to capture images and/or video of a part of the environment covered by the camera's field of view. In the illustrated example, the surveillance camera 102 may for example have a field of view suitable for capturing images/video of the road, the river side and/or the pavement, and thereby also of the car crash, the fluid leakage and/or the crowd. The microphone device 104 may be located to capture sound from the monitored environment. Thus, the microphone device 104 may register sound from the car crash and from people in the crowd.

The surveillance camera 102 may also be referred to as a monitoring camera. The camera may be a fixed camera, e.g., a stationary camera, or a movable camera, e.g., a pan, tilt and zoom (PTZ) camera. Further, the camera 102 may be a visible light camera, a thermal camera, or a camera comprising both a visible light camera and a thermal camera.

As schematically illustrated in Figure 2, parts of the surveillance system 100 may be communicatively connected over **a communications network 130.** Thus, the surveillance camera 102, the microphone device 104, the fire sensor 106, the door station 108 and the fluid sensor 110 may be connected with each other and with one or more of other devices connected to the communications network 130, such as with the client 120, **a server 140** and/or a **cloud service 150,** such as cloud computing, e.g. cloud storage and/or computing power/resources. The communication between the devices over the communications network 130 may be performed over wired and/or wireless connections. Data sequences captured by one or more of the surveillance camera 102, the microphone device 104, the fire sensor 106, the door station 108 and/or the fluid sensor 110 may be stored and/or processed in the server 140. Typically, the client 120 is also connected to the server 140, and the client 120 and/or the server 140 may be connected to the cloud service 150. The client 120 may be used to control one or more of surveillance camera 102, the microphone device 104, the fire sensor 106, the door station 108 and/or the fluid sensor 110, for example, by the operator issuing control commands at the monitoring station 122.

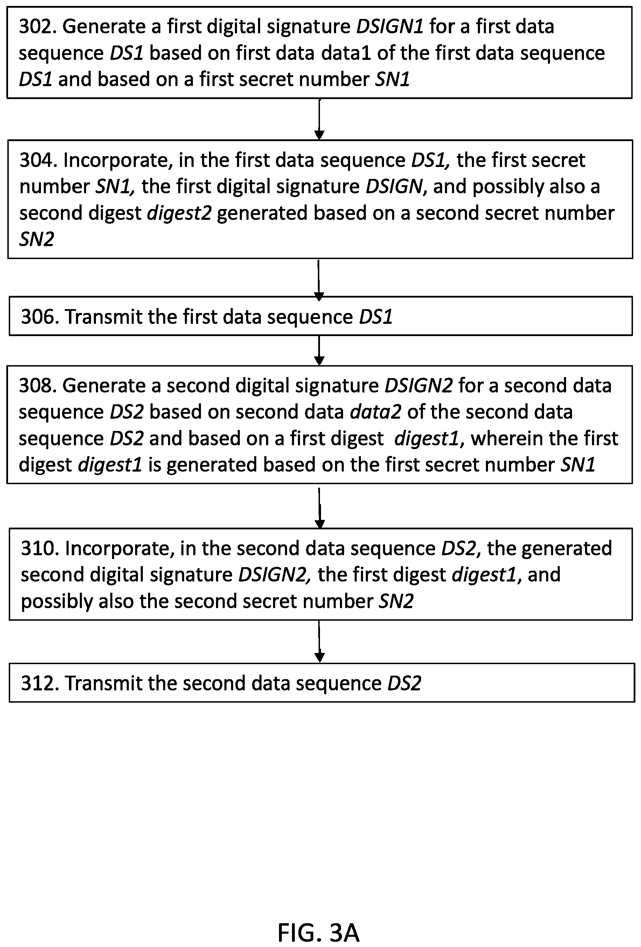

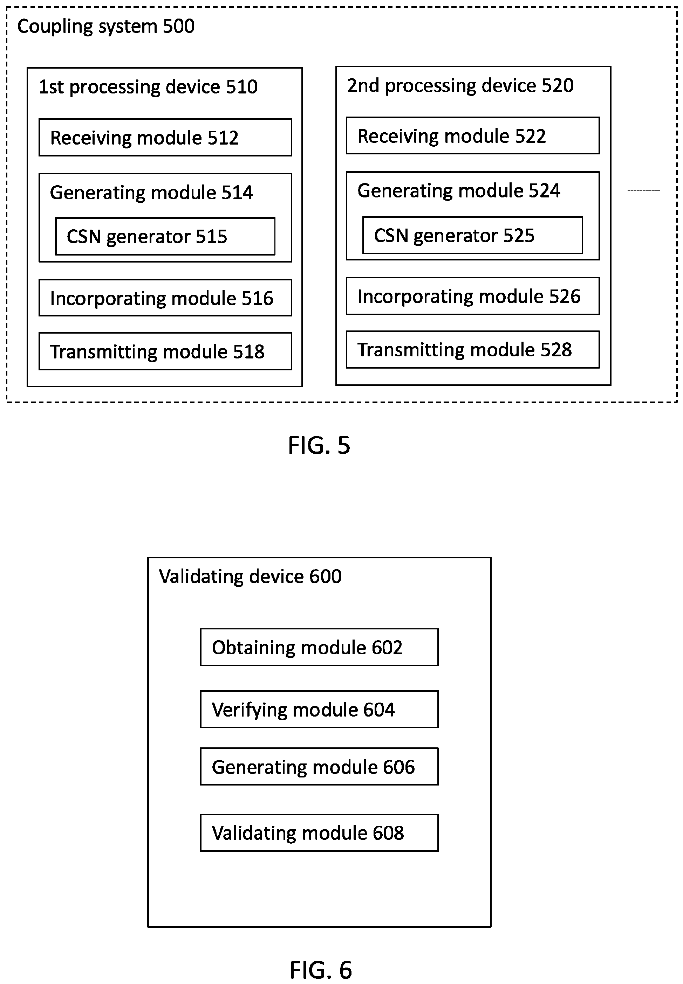

A method for coupling a first data sequence and a second data sequence temporally related to each other to enable validation of the first data sequence and the second data sequence as being coupled, will now be described with reference to the flowchart of **Figure 3A** and the block diagram of **Figure 5** schematically illustrating **a coupling system 500** for coupling the temporally related first and second data sequences to each other. It should also be understood that some of the actions may be optional and that actions may be taken in another suitable order.

As will be described below, actions 302, 304 and 306 relating to the first data sequence are performed by **a first processing device 510,** and actions 308, 310, and 312 relating to the second data sequence are performed by **a second processing device 520,** both of which processing devices 510, 520 are comprised in the coupling system 500.

The method may, as previously mentioned, be performed by different parts of the surveillance system 100, such as by different surveillance cameras 102, by one surveillance camera 102 and one microphone device 104, or by different parts of a single device, such as by different parts of a single surveillance camera 102 comprising for instance a microphone device 104. It should be understood that the different parts of the single surveillance camera 102 could be different parts processing the same type of data sequences, such as different parts processing different video sequences. Consequently, parts of the coupling system 500 may be implemented in different parts of the surveillance system 100. The first processing device 510 is implemented in a first part of the surveillance system 100 which first part captures a first data sequence *DS1*, and the second processing device 520 is implemented in a second part different from the first part of the surveillance system 100, which second part captures a second data sequence *DS2*. For example, the first processing device 510 may be implemented in the surveillance camera 102 and the second processing device 520 may be implemented in the microphone device 104. As another example, in case of the surveillance camera 102 being capable of generating two types of data sequences, e.g., a video data sequence and an audio data sequence, the first processing device 510 may be implemented in the part of the surveillance camera 102 capable of generating the video data sequence, and the second processing device 520 may be implemented in the part of the surveillance camera 102 capable of generating the audio data sequence.

It should be noted that an audio sequence that captures the same monitored or captured scene as a video sequence may very well capture sounds originating outside the field of view of the camera that captures the video sequence. A microphone device arranged in or near the camera may, for instance, capture voices of people within, as well as just outside the field of view of the camera or the sound of a window being smashed in front of, above, or behind the camera. Such sounds would all be considered as belonging to the same monitored or captured scene as the one within the field of view of the camera.

In order to enable authentication of data sequences generated by different parts of the surveillance system 100, a digital signature is generated for each data sequence and incorporated into its (own) data sequence. Further, to couple (link) data sequences that are temporally related, i.e., that are captured during at least partly overlapping time periods, the digital signature of each data sequence is generated based on a respective link as will be described below.

In action **302,** a first digital signature *DSIGN1* for a first data sequence *DS1* is generated based on first data *data1* of the first data sequence *DS1* and based on a first secret number *SN1*. Action 302 is performed by the first processing device 510 processing the first data sequence *DS1* captured during a first time period.

The first data *data1* may be video data comprising one or more image frames, audio data comprising one or more audio frames, and/or metadata comprising information relating to the data sequence or the scene. An audio frame comprises a number of audio samples, for a number of audio channels, captured during a time period.

The first secret number *SN1* is generated based on a seed value using a cryptographically secure number (CSN) generator 515. The cryptographically secure number generator 515 is comprised in the first processing device 510. The seed value used by the first processing device 510 may be referred to as a first seed value and the cryptographically secure number generator 515 comprised in the first processing device 510 may be referred to as a first cryptographically secure number generator. The seed value may be a pseudorandom number generated by sampling an entropy source. Further, the cryptographically secure number generator may be a true random number generator (TRNG), a fully entropy seeded pseudorandom number generator (PRNG), a cryptographically secure pseudorandom number generator (CSPRNG) or a cryptographic pseudorandom number generator (CPRNG). The fully entropy seeded pseudorandom number generator (PRNG) may be seeded with sufficient entropy, sourced from entropy sources such as TRNG output, energy entropy harvesting, network entropy harvesting, lava lamp entropy harvesting, just to give some examples.

The generated first secret number *SN1* may be a one-time password (OTP) such as a time-based OTP (TOTP). The first secret number *SN1* may be obtained by applying a hash function to the seed value and to a time, e.g., the current system time, or to a counter. Thus, the generated first secret number *SN1* may only be used during a limited time period, thereby preventing it from being misused by e.g., another part of the surveillance system if it by some reason is leaked or retrieved from the first processing device 510. The limited time period may be in the range of tenths of a second, seconds or tens of seconds, and once the limited time period is expired a new first secret number *SN1* is generated, which new first secret number *SN1* can be used during (a new instance of) the limited time period. Thus, each instance of the first secret number *SN1* could be said to be valid during a respective instance of the limited time period.

The first digital signature *DSIGN1* is generated by applying a first cryptographic digital signature algorithm to the first data *data1* and the first secret number *SN1*. The first cryptographic digital signature algorithm may be based on public-key cryptography, sometimes referred to as asymmetric cryptography, whereby the first processing device 510 uses its private key of an encryption key pair together with a message, i.e., the first data *data1* and the first secret number *SN1*, to create the first digital signature *DSIGN1.* A receiver with the corresponding public key of the key pair and being in receipt of the message and the first digital signature DSIGN1 can verify whether the first digital signature *DSIGN1* matches the message, i.e., the first data *data1* and the first secret number *SN1*, and thus the authenticity of the message.

In some embodiments, the first and second devices 510, 520 may exchange a respective unique identifier or a respective digest of their respective unique identifier. This may be the case when the first processing device 510 and the second processing device 520 are manufactured by different manufacturers but also when they are manufactured by the same manufacturer to provide additional security against fraud. The unique identifier may be a digital certificate for encryption or a public key of an encryption key pair of the respective processing device. The digests of the unique identifiers may be obtained by the first and second processing device 510, 520 applying a (first/second) cryptographic digest algorithm to its unique identifier. By exchanging the unique identifiers or the digests thereof, the first processing device 510 may include in the first data sequence *DS1* the second processing device's unique identifier or digest thereof, and the second processing device 520 may include in the second data sequence *DS2* the first processing device's unique identifier or digest thereof. Thereby, the recipient of the first data sequence *DS1* will obtain the second processing device's unique identifier or the digest thereof, and the recipient of the second data sequence *DS2* will obtain the first processing device's unique identifier or the digest thereof. By means of the received unique identifiers or the digests thereof, the recipient is able to verify that two processing devices asserted to transmit data sequences asserted to be coupled to each other are the true transmitting processing devices. Thus, if a fraudulent processing device is able to copy the content of the first processing device's transmitted first data sequence *DS1*, i.e. the unique identifier (or digest thereof) of the second processing device 520, the first digital signature *DSIGN1,* the first secret number *SN1* and the first data *data1,* and create a fraudulent data sequence comprising the copied content, the recipient of the fraudulent data sequence (asserted to be the first data sequence *DS1*) and the second data sequence *DS2* could conclude that the fraudulent processing device is not the true transmitter since the first processing device's unique identifier (or digest thereof) comprised in the second data sequence *DS2* does not match the unique identifier of the fraudulent processing device. It should be understood that this exchange of unique identifiers or digests thereof can occur between any number of processing devices operating in the surveillance system 100.

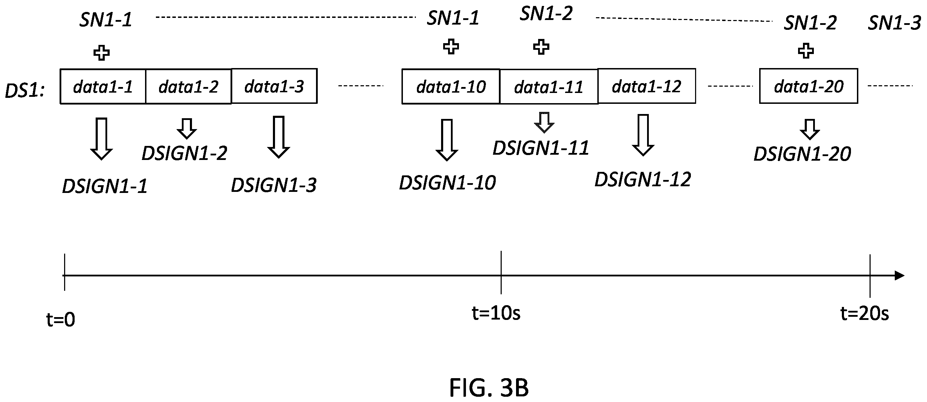

In order to secure that each of the generated instances of the first secret number *SN1* is used at least once during its validity time period for generating at least one first digital signature *DSIGN1* for the first data sequence *DS1*, the instances of the first digital signature *DSIGN1* is generated more often than the instances of the first secret number SN1 and each instance of the first digital signature *DSIGN1* is generated based on the valid instance of the first secret number *SN1*. Thereby, there will always be at least one first data sequence *DS1* comprising a first digital signature *DSIGN1* being based on a generated first secret number *SN1* that can be used to validate a second data sequence *DS2* comprising a first digest *digest1* (generated by another device based on a first secret number *SN1*) as being coupled to the first data sequence *DS1*. Thus, the first digital signature *DSIGN1* may be generated more frequently than the first secret number *SN1* is generated. For example, assume that the limited time period mentioned above for the validity of the first secret number *SN1* is 10 seconds and that the first digital signature *DSIGN1* is generated every second, then an instance of the first digital signature *DSIGN1* may be generated every second and thus ten instances of the first digital signature *DSIGN1* may be generated for the first data sequence *DS1* using the same first secret number *SN1*. However, it should be understood that the instances of the first digital signature *DSIGN1* may not be the same since they are generated based on instances of the first data *data1* that may be different. **Figure 3B** schematically illustrates an exemplary first data sequence *DS1* comprising a plurality of first data *data1*; *data1-1, data1-2,* ..., *data1-20.* At a point in time t=0s a first secret number *SN1; SN1-1* is generated. The first secret number *SN1; SN1-1* is used when generating the first digital signature *DSIGN1*; *DSIGN1-1,* ... , *DSIGN1-10* for the first data *data1; data1-1, ..., data1-10,* during the limited time period of 10s, upon expiry of which time period a new first secret number *SN1*; *SN1-2* is generated. The new first secret number *SN1*; *SN1-2* is used when generating the first digital signature *DSIGN1*; *DSIGN1-11,* ... , *DSIGN1-20* for the first data *data1*; *data1-11,* ..., *data1-20* during the limited time period of 10s.Then, at the point in time of t=20s yet a new first secret number *SN1*; *SN1-3* is generated and used when generating subsequent digital signatures during the limited time period.

In order to enable validation of a second data sequence *DS2* as being temporally related to the first data sequence *DS1* and to digitally sign the first data sequence *DS1*, the first secret number *SN1* and the first digital signature *DSIGN1* are incorporated in the first data sequence *DS1* in action **304.**

The actions of generating the first digital signature *DSIGN1* and of incorporating the generated first digital signature *DSIGN1* in the first data sequence *DS1* may be referred to as digitally signing the first data sequence *DS1.* The digitally signing of a data sequence by a transmitter enables a receiver to authenticate the data sequence as being from the transmitter. Further, by generating the digital signature also based on a secret number acting as a link, and by incorporating the secret number in the data sequence, the data sequence can be authenticated by a receiver and a possible existence of another temporally related data sequence is indicated.

In action **306,** the first data sequence *DS1* is transmitted. The first data sequence *DS1* is transmitted to a receiver, such as to the client 120, or to a storage device, such as the server 140 or the cloud service 150, wherein the first data sequence *DS1* is stored before it is provided to a validating device 600. The validating device 600 will be described in more detail below.

A second processing device 520 is processing a second data sequence DS2 captured during a second time period at least partly overlapping with the first time period. In order to digitally sign the second data sequence *DS2* and to enable validation of the second data sequence *DS2* as being temporally related to another data sequence, the second processing device 520 generates a second digital signature *DSIGN2* for the second data sequence DS2 based on second data *data2* of the second data sequence *DS2* and based on a first digest *digest1,* Action 308. The first digest *digest1* is generated based on the first secret number SN1. The first digest *digest1* generated based on the first secret number SN1 may be obtained by the second processing device 520 applying a first cryptographic digest algorithm to the first secret number SN1.

The second processing device 520 may have received the first secret number SN1 and information about for which time period, e.g., the second time period at least partly overlapping with the first time period, it should be used to generate the first digest *digest1.* Alternatively, the second processing device 520 may have the same seed value and the same type of cryptographically secure number generator 525 as the cryptographically secure number generator 515 of the first processing device 510 and also knowledge about when (e.g., start time and time interval) to use the cryptographically secure number generator 525 to generate the first secret number *SN1* based on the seed value. Once the first secret number *SN1* is generated, it could be used to generate the first digest *digest1.* As mentioned above, the generated first secret number *SN1* may only be used during a limited time period, thereby preventing it from being misused by e.g., another part of the surveillance system if it by some reason is leaked or retrieved from the second processing device 520. When the limited time period is expired, a new instance of the first secret number *SN1* is generated and used for a new instance of the limited time period.

In some embodiments, the first processing device 510 and the second processing device 520 may have exchanged the seed value and characteristics of the cryptographically secure number generator needed to generate the first secret number *SN1*. As another example, the first processing device 510 and the second processing device 520 may have exchanged/received the seed value and characteristics of the cryptographically secure number generator needed to generate the first secret number *SN1* via/from the client 120. Assuming the clocks of both processing devices are synchronized, they will be able to generate the same first secret number *SN1* during the same time period. Once the second processing device 520 has generated a first secret number SN1, it can use the generated first secret number *SN1* during the limited time period to generate a first digest *digest1.*

In some embodiments, the second digital signature *DSIGN2* is generated by applying a second cryptographic digital signature algorithm to the second data *data2,* the first digest *digest1* and to the second secret number *SN2*. The first digest *digest1* generated based on the first secret number *SN1* may be obtained by applying a first cryptographic digest algorithm to the first secret number *SN1*. As the first cryptographic digital signature algorithm the second cryptographic digital signature algorithm may be based on public-key cryptography, sometimes referred to as asymmetric cryptography. Thus, the second processing device 520 may use its private key of an encryption key pair together with a message, i.e., the second data *data2* and the second secret number *SN2*, to create the second digital signature *DSIGN2.* A receiver with the corresponding public key of the key pair and being in receipt of the message and the second digital signature *DSIGN2* can verify whether the second digital signature *DSIGN2* matches the message, i.e., the second data *data2* and the second secret number *SN2*, and thus the authenticity of the message.

For similar reasons as those described above regarding the frequency by which the first processing device 510 generates the first digital signature *DSIGN1* relative to the frequency by which it generates the first secret number *SN1*, the second processing device 520 generates the second digital signature *DSIGN2* more frequently than it generates the first secret number *SN1*. Further, the second digital signature *DSIGN2* (and the first digest *digest1*) may be generated with the same frequency as the first digital signature *DSIGN1* or the second digital signature *DSIGN2* (and the first digest *digest1*) may be generated with a frequency that is different from (higher/lower than) the frequency of the generation of the first digital signature *DSIGN1.* For example, assume that the limited time period mentioned above for the validity of the first secret number *SN1* is 10 seconds and that the second digital signature *DSIGN2* is generated every third second, then an instance of the second digital signature *DSIGN2* (and of the first digest *digest1*) may be generated every third second and thus three instances of the second digital signature *DSIGN2* may be generated for the second data sequence *DS2* using the same first secret number *SN1* as compared to the ten instances of the first digital signature *DSIGN1* when the first digital signature *DSIGN1* is generated every second as in the example mentioned above. However, as described above in relation to the first digital signature DSIGN1, it should be understood that the instances of the second digital signature *DSIGN2* may not be the same since they are generated based on instances of the second data *data2* that may be different.

In action **310,** the second processing device 520 incorporates the generated second digital signature *DSIGN2* and the first digest *digest1* in the second data sequence *DS2*. Thereby, the first data sequence *DS1* and the second data sequence *DS2* are coupled by the first secret number *SN1* and the first digest *digest1.* In action **312,** the second processing device 520 transmits the second data sequence *DS2*. Like the first data sequence *DS1*, the second data sequence *DS2* is transmitted to a receiver, such as the validating device 600 or to a storage device, such as the server 140, storing it before providing it to the validating device 600.

Sometimes it may be desirable to also include a digest when generating the first digital signature *DSIGN1* in addition to the first digest *digest1* included in the generation of the second digital signature *DSIGN2* as described above. For example, this may be the case when two or more data sequences temporally related to each other should be more strongly linked to each other by cross-coupling them. Cross-coupling of the first and second data sequences is achieved by providing links to the data sequences which links not only connect the second sequence to the first sequence but also the first sequence to the second sequence.

In such embodiments, the first digital signature *DSIGN1* is further generated based on a second digest *digest2,* which second digest *digest2* is generated based on a second secret number *SN2*. The second secret number *SN2* may be generated based on a seed value using a cryptographically secure number generator 515 of the first processing device 510. The seed value may be the same seed value as the first seed value mentioned above or it could be a second seed value different from the first seed value. Further, the cryptographically secure number generator 515 should have knowledge about when to generate the second secret number *SN2*.Thus, the cryptographically secure number generator 515 has knowledge about start time and time interval for the generation of the second secret number *SN2*. The seed value may be a pseudorandom number generated by sampling an entropy source. For example, the cryptographically secure number generator 515 may be a true random number generator (TRNG), a fully entropy seeded pseudorandom number generator (PRNG), a cryptographically secure pseudorandom number generator (CSPRNG) or a cryptographic pseudorandom number generator (CPRNG). The fully entropy seeded pseudorandom number generator (PRNG) may be seeded with sufficient entropy, sourced from entropy sources such as TRNG output, energy entropy harvesting, network entropy harvesting, lava lamp entropy harvesting, just to give some examples.

In some embodiments, the first processing device 510 and the second processing device 520 may have exchanged the second seed value, start time, time interval, and characteristics of the cryptographically secure number generator needed to generate the second secret number *SN2*. Assuming the clocks of both processing devices 510, 520 are synchronized, they will be able to generate the same second secret number *SN2* during the same time period. Once the first processing device 510 has generated a second secret number *SN2*, it can use it to generate a second digest *digest2.*

In some embodiments, the second secret number *SN2* may be a one-time password (OTP) such as a time-based OTP (TOTP). Thus, the second secret number SN2 may only be used during a limited time period preventing it from being misused. This limited time period may be the same limited time period as for the first secret number *SN1* or it may be another second limited time period as long as the limited time period is shorter than the time period for generating the digital signatures.

Further, the second digest *digest2* generated based on the second secret number *SN2* may be obtained by the first processing device 510 applying a second cryptographic digest algorithm to the second secret number *SN2*. The second cryptographic digest algorithm may be the same as the first cryptographic digest algorithm.

Thus, in some embodiments comprising cross-coupling of the first and second data sequences, the first processing device 510 may generate the first digital signature *DSIGN1* by applying the first cryptographic digital signature algorithm to the first data *data1,* the first secret number *SN1* and to the second digest *digest2.* In such embodiments, the second processing device 520 generates the second digital signature *DSIGN2* further based on the second secret number *SN2*. Thus, the second digital signature *DSIGN2* is generated by applying the second cryptographic digital signature algorithm to the second data *data2,* the first digest *digest1* and to the second secret number *SN2*. Also, in such embodiments, action 304 further comprises incorporating the second digest *digest2* in the first data sequence *DS1*, and action 310 further comprises incorporating the second secret number *SN2* in the second data sequence *DS2*.

In scenarios wherein more than two data sequences are temporally related, it may be advantageous to cross-couple one or more pairs of the two or more temporally related data sequences in order to enable a receiver to validate at least some pairs of received data sequences as temporally related even if one or more of the other cross-coupled data sequences are not received by the receiver.

Assume that three temporally related data sequences exist, and that they are processed by a respective processing device. Thus, assume that one of the data sequences is referred to as being the first data sequence *DS1* processed by the first processing device 510, one is the second data sequence *DS2* processed by the second processing device 520 and that one is a third data sequence DS3 processed by the third processing device (not shown). Even if Figure 5 only shows two processing devices it should be understood that the coupling system 500 could comprise any number of processing devices as long as the number of processing devices is equal to the number of temporally related data sequences.

The cross-coupling of the first and second data sequence *DS1, DS2* is performed as described above.

In order to also cross-couple the third data sequence DS3 to the first data sequence DS1, a third digest digest3 should be included when generating the first digital signature *DSIGN1* and also incorporated into the first data sequence *DS1*. The third digest *digest3* is generated based on a third secret number *SN3* in the same way as the first and second digests *digest1, digest2* are generated. Then, the third processing device should generate a third digital signature *DSIGN3* for the third data sequence *DS3* based on third data *data3* of the third data sequence *DS3* and based on the first digest *digest1.* The first digest *digest1* is generated based on the first secret number *SN1* by the third processing device in the same way as the second processing device 520 generated first digest *digest1.* The third processing device has knowledge about the first secret number *SN1* or the first seed value in a similar way as described above for the second processing device 520. Thereafter, the third processing device incorporates the generated third digital signature *DSIGN3* and the first digest *digest1* in the third data sequence *DS3*. If the second data sequence *DS2* is to be coupled to the third data sequence *DS3*, the second *digest2* should also be included when generating the third digital signature *DSIGN3.* The second digest *digest2* is generated based on the second secret number *SN2* by the third processing device in the same way as the first processing device 510 generated the second digest *digest2.* The third processing device has knowledge about the second secret number *SN2* or the second seed value in a similar way as described above for the second processing device 520. If the second data sequence *DS2* is to be coupled to the third data sequence *DS3*, the second digest *digest2* is also included in the third data sequence *DS3*.

Once the cross-coupling of the three data sequences has been performed, the data sequences *DS1, DS2, DS3* will have the content as shown in the table below.

| Data sequence | Content |
|---|---|
| First data sequence *DS1* | - First data *data1* |
| | - First secret number *SN1* |
| | - Second digest *digest2* |
| | - Third digest *digest3* |
| | - First digital signature *DSIGN1* (*data1 + SN1 + digest2 + digest3*) |
| *Second data sequence DS2* | - Second data *data2* |
| | - First digest *digest1* |
| | - Second secret number *SN2* |
| | - Third digest *digest3* |
| | - Second digital signature *DSIGN2* (*data2 + digest1 + SN2 + digest3*) |
| *Third data sequence DS3* | - Third data *data3* |
| | - First digest *digest1* |
| | - Second digest *digest2* |
| | - Third secret number *SN3* |
| | - Third digital signature *DSIGN3* (*data3 + digest1 + digest2 + SN3*) |

As can be concluded from the table above and from the previously described cross-coupling of two data sequences, each one of the cross-coupled data sequences will comprise its own data, its own secret number, its own digital signature and a respective digest based on a respective secret number from each of one or more data sequences being included in the cross-coupling. Further, the digital signature for each one of the cross-coupled data sequences will be generated based on its own data, its own secret number, and on the respective digest from each of the one or more data sequences being included in the cross-coupling.

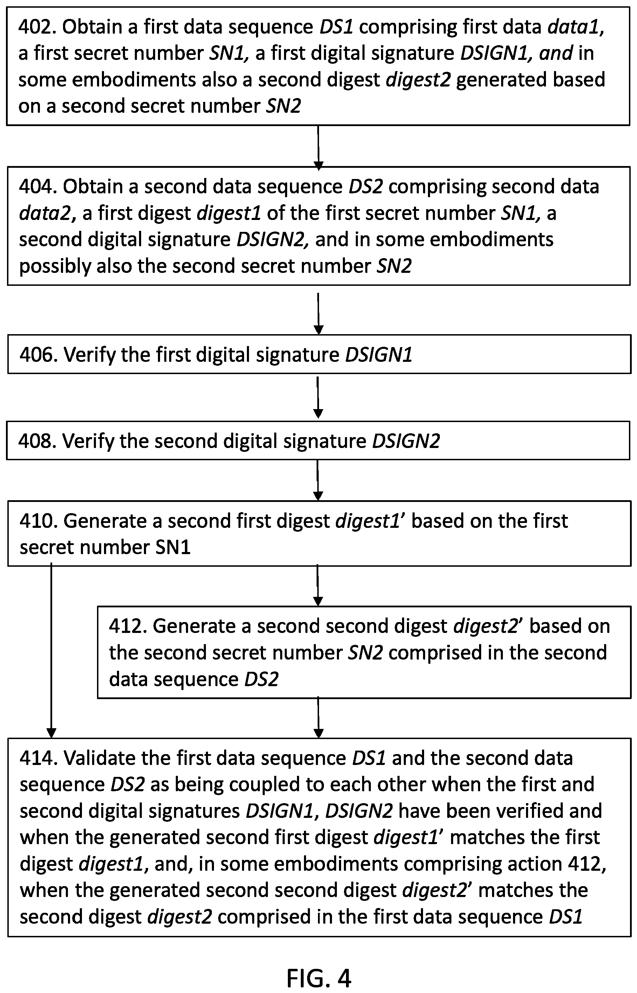

A method for validating a first data sequence and a second data sequence as being coupled to each other will now be described with reference to the flowchart of **Figure 4** and to the block diagram of **Figure 6** schematically illustrating **a validating device 600** for validating the first and second data sequences as coupled. The validating device 600 is comprised in or connected to the surveillance system 100. For example, the validating device 600 may be comprised in the client 120 or it could be connected to the client 120, the server 140 or the cloud service 150. It should be understood that some of the actions may be optional and that actions may be taken in another suitable order.

In action **402** is a first data sequence *DS1* comprising first data *data1,* a first secret number *SN1* and a first digital signature *DSIGN1* obtained, and in action **404** is a second data sequence *DS2* comprising second data *data2,* a first digest *digest1* of the first secret number *SN1* and a second digital signature *DSIGN2* obtained.

For example, the first data sequence *DS1* and the second data sequence *DS2* may be obtained by receiving them from the first processing device 510 and the second processing device 520, respectively, or by retrieving them from a storage device, e.g., from the server 140 or the cloud service 150. The actions of obtaining the first and second data sequences *DS1, DS2* may be performed by **an obtaining module 602** comprised in the validating device 600.

In order to authenticate the obtained first and second digital sequences *DS1, DS2* as originating from a respective alleged transmitter, e.g., from the first and second processing devices 510, 520 or from the device(s) incorporating the first and second processing devices 510, 520, the first and second digital signatures *DSIGN1, DSIGN2* comprised in the respective obtained first and second digital sequences *DS1, DS2* are verified in actions **406** and **408.** This may be performed by **a verifying module 604** of the validation device 600.

The verifying (action 406) of the first digital signature *DSIGN1* comprises verifying that the first digital signature *DSIGN1* is the result of applying a first cryptographic digital signature algorithm to the first data *data1* and the first secret number *SN1*. Further, the verifying (action 408) of the second signature *DSIGN2* comprises verifying that the second digital signature *DSIGN2* is the result of applying a second cryptographic digital signature algorithm to the second data *data2,* and the first digest *digest1.*

In order to be able to verify the digital signatures, the verifying module 604 has knowledge about how the first and second digital signatures *DSIGN1, DSIGN2* were generated by the alleged transmitters, e.g., by the first and second processing devices 510, 520 or by the device(s) incorporating the first and second processing devices 510, 520. Thus, the verifying module 604 is configured to verify the received digital signatures *DSIGN1, DSIGN2* using (against/with) the received data, e.g., the first data *data1,* the first secret number SN1, the second data *data2,* and the first digest *digest1.* For example, the verifying module 604 may be configured to decrypt the received first and second digital signatures *DSIGN1, DSIGN2* and to generate a first signature digest *signdigest1* based on the received first data *data1* and the received first secret number *SN1*, and a second signature digest *signdigest2* based on the received second data *data2* and the received first digest *digest1.* Then the verifying module 604 compares the decrypted version of the first digital signature *DSIGN1* with the generated first signature digest *signdigest1,* and if they match the first digital signature *DSIGN1* is verified. The verifying module 604 also compares the decrypted version of the second digital signature *DSIGN2* with the generated second signature digest *signdigest2,* and if they match the second digital signature *DSIGN2* is verified.

In some embodiments, the first digital signature *DSIGN1* is verified when a decrypted version of the first digital signature *DSIGN1* is a hash that matches a hash of the first data *data1* and the first secret number *SN1*.

In a similar manner and in some embodiments, the second digital signature *DSIGN2* may be verified when a decrypted version of the obtained second digital signature *DSIGN2* is a hash that matches a hash of the second data *data2* and the first digest *digest1.*

The term "match" when used in this disclosure should be understood as two values match each other if they are the same.

In order to be able to validate that the obtained first and second data sequences *DS1, DS2* are coupled, i.e., related to each other in time meaning that they are captured in at least partly overlapping time periods, a second first digest *digest1'* is in an action **410** generated based on the first secret number *SN1* from the first digital sequence *DS1*.

In some embodiments, the second first digest *digest1'* generated based on the first secret number *SN1* may be obtained by applying a first cryptographic digest algorithm to the first secret number *SN1*.

In some embodiments comprising cross-coupled data sequences, a second second digest *digest2'* is generated based on a second secret number *SN2*. The second second digest *digest2'* generated based on the second secret number *SN2* may be obtained by applying a second cryptographic digest algorithm to the second secret number *SN2*. The first and second cryptographic digest algorithms may be the same cryptographic digest algorithm. Action 410 may be performed by **a generating module 606** comprised in the validating device 600.

In an action **414,** the first data sequence *DS1* and the second data sequence *DS2* are validated as being coupled to each other when the first and second digital signatures *DSIGN1, DSIGN2* have been verified and when the generated second first digest *digest1'* matches the first digest *digest1.* This may be performed by **a validating module 608** comprised in the validating device 600.

As previously described, it is sometimes desirable to more strongly link two or more data sequences, e.g., the first and second data sequences *DS1*, *DS2,* to each other by cross-coupling them. Thus, such cross-coupled data sequences may be obtained by the validating device 600.

In such embodiments, the first data sequence *DS1* further comprises a second digest *digest2* and the second data sequence *DS2* further comprises a second secret number *SN2*. Further, the verifying (action 406) of the first digital signature *DSIGN1* comprises verifying that the first digital signature *DSIGN1* is the result of applying a first cryptographic digital signature algorithm to the first data *data1,* the first secret number *SN1* and also to the second digest *digest2.* Furthermore, the verifying (action 408) of the second digital signature *DSIGN2* comprises verifying that the second digital signature *DSIGN2* is the result of applying a second cryptographic digital signature algorithm to the second data *data2,* the first digest *digest1* and also to the second secret number *SN2*. Also in such embodiments, the method comprises an action **412,** wherein a second second digest *digest2'* is generated based on the second secret number *SN2*. This may be performed by the generating module 606. In such embodiments, the action 414 of validating the first data sequence *DS1* and the second data sequence *DS2* as being coupled to each other further requires that the generated second second digest *digest2'* matches the second digest *digest2.*

A coupling system 500 for coupling a first data sequence and a second data sequence temporally related to each other to enable validation of the first data sequence and the second data sequence as being coupled will now be described with reference to **Figure 5****.**

As previously mentioned, the coupling system 500 comprises a first processing device 510 configured to process a first data sequence *DS1* captured during a first time period. The first processing device 510 may comprise a receiving module 512 configured to receive the first data sequence *DS1*. The first processing device 510 is configured to generate a first digital signature *DSIGN1* for the first data sequence *DS1* based on first data *data1* of the first data sequence *DS1* and based on a first secret number *SN1*. This may be performed by a generating module 514 of the first processing device 510. Further, the first processing device 510 is configured to incorporate the first secret number S*N*1 and the first digital signature *DSIGN1* in the first data sequence *DS1*, and to transmit the first data sequence *DS1*. This may be performed by an incorporating module 516 and a transmitting module 518, respectively, of the first processing device 510.

The coupling system 500 also comprises a second processing device 520 configured to process a second data sequence *DS2* captured during a second time period at least partly overlapping with the first time period. The second processing device 520 may comprise a receiving module 522 configured to receive the second data sequence *DS2*. The second processing device 520 is further configured to generate a second digital signature *DSIGN2* for the second data sequence *DS2* based on second data *data2* of the second data sequence *DS2* and based on a first digest *digest1,* wherein the first digest *digest1* is generated based on the first secret number *SN1*. This may be performed by a generating module 524 of the second processing device 520. Furthermore, the second processing device 520 is configured to incorporate the second digital signature *DSIGN2* and the first digest *digest1* in the second data sequence *DS2*, whereby the first data sequence *DS1* and the second data sequence *DS2* are coupled by the first secret number *SN1* and the first digest *digest1.* This may be performed by an incorporating module 526 of the second processing device 520. The second processing device 520 is also configured to transmit the second data sequence *DS2*. This may be performed by a transmitting module 528 of the second processing device 520.

The first and second processing devices 510, 520 may be a respective encoder, such as a video encoder and an audio encoder, comprised in a respective part of the surveillance system 100. For example, the first processing device 510 may be a video encoder comprised in the surveillance camera 102 and being configured to process the first data sequence when being a video data sequence. The second processing device 520 may be an audio encoder comprised in the surveillance camera 102 or in the microphone device 104 and being configured to process the second data sequence when being an audio data sequence.

In embodiments, wherein data sequences temporally related to each other should be cross-coupled, the first processing device 510 is further configured to generate the first digital signature *DSIGN1* based additionally on a second digest *digest2,* which second digest *digest2* is generated on a second secret number *SN2*. In addition, the first processing device 510 is configured to incorporate the second digest *digest2* in the first data sequence *DS1.* In such embodiments, the second processing device 520 is further configured to generate the second digital signature *DSIGN2* based additionally on the second secret number *SN2*, and to incorporate the second secret number *SN2* in the second data sequence *DS2*.

In order to be able to couple temporally related data sequences, the first and second processing devices 510, 520 should be synchronised in time. That could be achieved by providing the first and second processing device 510, 520 with synchronized clocks. Especially, when the first and second processing devices 510, 520 are different processing devices it is advantageous that they are provided with synchronized clocks. Synchronized in this context should be understood as the difference between the clocks being smaller than a threshold. By having synchronized clocks, the processing devices 510, 520 are assured to generate the expected secrets numbers SN1 and SN2 when the algorithms for creating those numbers are time-based. In some cases, the clock difference threshold results in that a small range of secret numbers SN1 and SN2 are acceptable. Any secret number that would be generated within the threshold clock difference could be acceptable. In those cases, any acceptable secret number would be an expected number and would thereby constitute a match when validating that the data sequences are coupled.

The first and second processing devices 510, 520 may be comprised in a single device, such as in a single monitoring camera 102, or in two different devices, such as in a respective monitoring camera 102, or in a monitoring camera 102 and a microphone device 104, respectively.

A validating device 600 for validating a first data sequence and a second data sequence as being coupled to each other will now be described with reference to **Figure 6****.**

The validating device 600 is configured to obtain a first data sequence *DS1* comprising first data *data1,* a first secret number *SN1* and a first digital signature *DSIGN1.* The validating device 600 is also configured to obtain a second data sequence *DS2* comprising second data *data2,* a first digest *digest1* of the first secret number *SN1* and a second digital signature *DSIGN2.* This may be performed by the obtaining module 602 of the validating device 600.

Further, the validating device 600, e.g., by means of the verifying module 604, is configured to verify the first digital signature *DSIGN1* and to verify the second digital signature *DSIGN2.*

The validating device 600, e.g., by means of the generating module 606, is also configured to generate a second first digest *digest1'* based on the first secret number *SN1*. Sometimes the first and second processing devices 510, 520 are not completely synchronized in time and thus their respective generated first secret numbers are not exactly the same causing a digest generated based on the first secret number *SN1* received from the first processing device 510 to be different from the first digest *digest1* generated by the processing device 520 on its generated first secret number *SN1*. Therefore, the validating device 600 sometimes generates several instances of the second first digest *digest1'* based on instances of the first secret number *SN1* that are within the threshold clock difference of the received first secret number *SN1*. The threshold clock difference could be a predetermined value that is known by the validating device 600 in advance. Alternatively, the threshold clock difference could be included in one or more of the streams or sent to the validating device 600 by some other means. The threshold clock difference is typically a low multiple (e.g. two to five times) of the time for which each secret number is valid. That way, a fixed number of secret numbers can pass the validation. Another way of achieving this could be to let the threshold be a number instead of a clock difference. The threshold number could be made known by the validating device 600 in the same way as the threshold clock difference. The threshold number would indicate how many neighboring secret numbers that should be accepted by the validation. In one example, only the closest secret number in each direction (e.g. a closest lower secret number and a closest higher secret number) is considered as valid.

Furthermore, the validating device 600, e.g., by means of the validating module 608, is configured to validate the first data sequence *DS1* and the second data sequence *DS2* as being coupled to each other when the first and second digital signatures *DSIGN1, DSIGN2* have been verified and when the generated second first digest *digest1'* matches the first digest *digest1.* When the validating device 600 has generated several instances of the second first digest *digest1'* based on instances of the first secret number *SN1* that are within the threshold clock difference of the received first secret number *SN1*, the validating device 600 may have to compare each of them with the received first digest *digest1* to find a match.

As previously mentioned, in some embodiments temporally related data sequences are cross-coupled. In such embodiments, the first data sequence *DS1* further comprises a second digest *digest2,* and the second data sequence *DS2* further comprises a second secret number *SN2*. Thus, in addition to the first data *data1,* the first secret number *SN1* and the first digital signature *DSIGN1,* the first data sequence DS1 comprises also the second digest *digest2.* Similarly, in addition to the second data *data2,* the first digest *digest1,* and the second digital signature *DSIGN2,* the second data sequence *DS2* comprises also the second secret number *SN2*. In order to validate such cross-coupled data sequences, the validating device 600 is further configured to generate a second second digest *digest2'* based on the second secret number *SN2* from the second data sequence DS2; and to validate the first data sequence *DS1* and the second data sequence *DS2* as being temporally coupled to each other when also the generated second second digest *digest2'* matches the second digest *digest2* from the first data sequence *DS1*. As mentioned above, sometimes the first and second processing devices 510, 520 are not completely synchronized in time and thus their respective generated second secret numbers are not exactly the same causing a digest generated based on the second secret number *SN2* received from the second processing device 520 to be different from the second digest *digest2* generated by the processing device 510 on its generated second secret number. Therefore, the validating device 600 sometimes generates several instances of the second second digest *digest2'* based on instances of the second secret number *SN2* that are within the threshold clock difference of the received second secret number *SN2*. When the validating device 600 has generated several instances of the second second digest *digest2'* based on instances of the second secret number *SN2* that are within the threshold clock difference of the received second secret number *SN2*, the validating device 600 may have to compare each of them with the received second digest *digest2* to find a match.

As also mentioned above, in some embodiments the first and second devices 510, 520 may exchange a respective unique identifier or a respective digest of their respective unique identifier in order to provide additional security against fraud. The validating device 600 may obtain the second processing device's unique identifier or digest thereof from the first data sequence *DS1* wherein it has been included by the first processing device 510. The validating device 600 may also obtain the first processing device's unique identifier or digest thereof from the second data sequence *DS2* wherein it has been included by the second processing device 520. By means of the received unique identifiers or the digests thereof, the validating device 600 is able to verify that two processing devices asserted to transmit data sequences asserted to be coupled to each other are the true transmitting processing devices. Thus, if a fraudulent processing device is able to copy the content of the first processing device's transmitted first data sequence *DS1,* i.e. the unique identifier (or digest thereof) of the second processing device 520, the first digital signature *DSIGN1,* the first secret number *SN1* and the first data *data1,* and create a fraudulent data sequence comprising the copied content, the validating device 600 being in receipt of the fraudulent data sequence (asserted to be the first data sequence *DS1*) and the second data sequence *DS2* could conclude that the fraudulent processing device is not the true transmitter since the first processing device's unique identifier (or digest thereof) comprised in the second data sequence *DS2* does not match the unique identifier of the fraudulent processing device.

Embodiments also relates to a non-transitory computer-readable medium having stored thereon computer code instructions adapted to carry out embodiments of the methods described herein when executed by a device having processing capability.

As described above, the coupling system 500 may be configured to implement a method for coupling temporally related data sequences and the validating device 600 may be configured to implement a method for validating data sequences as coupled and thus as temporally related. For this purpose, the coupling system 500 and the validating device 600 may include circuitry which is configured to implement the various method steps described herein.

In a hardware implementation, the circuitry may be dedicated and specifically designed to implement one or more of the method steps. The circuitry may be in the form of one or more integrated circuits, such as one or more application specific integrated circuits or one or more field-programmable gate arrays.

In a software implementation, the circuitry may instead be in the form of a processor, such as a microprocessor, which in association with computer code instructions stored on a (non-transitory) computer-readable medium, such as a non-volatile memory, causes the coupling system 500 and the validation device 600 to carry out method steps disclosed herein. Examples of non-volatile memory include read-only memory, flash memory, ferroelectric RAM, magnetic computer storage devices, optical discs, and the like. In a software case, each of the method steps described above may thus correspond to a portion of computer code instructions stored on the computer-readable medium, that, when executed by the processor, causes coupling system 500 and the validating device 600 to carry out any method disclosed herein.

It is to be understood that it is also possible to have a combination of a hardware and a software implementation, meaning that some method steps are implemented in hardware and others in software.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method for coupling a first data sequence and a second data sequence temporally related to each other to enable validation of the first data sequence and the second data sequence as being temporally related to each other, the method comprises:
by a first processing device (510) processing a first data sequence (*DS1*) captured from a monitored environment during a first time period:
- *generating (302)* a first digital signature (*DSIGN1*) for the first data sequence (*DS1*) by applying a first cryptographic digital signature algorithm to:
first data (*data1*) of the first data sequence (*DS1*) and
a first secret number (*SN1*);
- *incorporating (304)* the first secret number (*SN1*) and the first digital signature (*DSIGN1*) in the first data sequence (*DS1*); and
- *transmitting (306)* the first data sequence (*DS1*);
by a second processing device (520) processing a second data sequence (*DS2*) different from the first data sequence (*DS1*) and captured from the monitored environment during a second time period at least partly overlapping with the first time period, wherein the first and second processing devices (510, 520) are different parts of a surveillance system (100) and set up to synchronously in time generate a respective same first secret number (*SN1*), and wherein the second data sequence (*DS2*) is different from the first data sequence (*DS1*):
- *generating (308)* a second digital signature (*DSIGN2*) for the second data sequence (*DS2*) by applying a second cryptographic digital signature algorithm to:
second data (*data2*) of the second data sequence (*DS2*) and
a first digest (*digest1*), wherein the first digest (*digest1*) is generated by the second processing device (520) applying a first cryptographic digest algorithm to the first secret number (*SN1*);
- *incorporating (310)* the generated second digital signature (*DSIGN2*) and the first digest (*digest1*) in the second data sequence (*DS2*), whereby the first data sequence (*DS1*) and the second data sequence (*DS2*) are coupled by the first secret number (*SN1*) and the first digest (*digest1*); and
- *transmitting (312)* the second data sequence (*DS2*).

2. The method of claim 1, wherein the first and second processing devices (510, 520) synchronously in time generate a respective same second secret number (*SN2*), wherein the first digital signature (*DSIGN1*) is further generated based on a second digest (*digest2*), which second digest (*digest2*) is generated by the first processing device (510) applying a second cryptographic digest algorithm to the second secret number (*SN2*), wherein the second digital signature (*DSIGN2*) is further generated based on the second secret number (*SN2*), wherein the *incorporating (304)* of the first secret number (*SN1*) and the first digital signature (*DSIGN1*) in the first data sequence (*DS1*) further comprises:
- incorporating the second digest (*digest2*) in the first data sequence (*DS1*); and wherein the *incorporating (310)* of the generated second digital signature (*DSIGN2*) and the first digest (*digest1*) in the second data sequence (*DS2*) further comprises:
- incorporating the second secret number (*SN2*) in the second data sequence (*DS2*).

3. The method of claim 2, wherein the first digital signature (*DSIGN1*) is generated by the first processing device (510) applying the first cryptographic digital signature algorithm to the first data (*data1*), the first secret number (*SN1*) and also to the second digest (*digest2*); and wherein the second digital signature (*DSIGN2*) is generated by the second processing device (520) applying the second cryptographic digital signature algorithm to the second data (*data2*), the first digest (*digest1*) and also to the second secret number (*SN2*).

4. The method of any one of claims 1-3, wherein the first and second secret numbers (*SN1, SN2*) are generated based on a respective seed value and using a respective cryptographically secure number generator (515, 525).

5. The method of claim 4, wherein each of the first and second secret numbers (*SN1, SN2*) is a one-time password, OTP, such as a time-based OTP, TOTP.

6. A method for validating a first data sequence and a second data sequence as being temporally related to each other, the method comprises:
- *obtaining (402)* a first data sequence (*DS1*) comprising first data (*data1*), a first secret number (*SN1*) and a first digital signature (*DSIGN1*);
- *obtaining (404)* a second data sequence (*DS2*) comprising second data (*data2*), a first digest (*digest1*) of the first secret number (*SN1*) and a second digital signature (*DSIGN2*);
- *verifying (406)* the first digital signature (*DSIGN1*);
- *verifying (408)* the second digital signature (*DSIGN2*);
- *generating (410)* a second first digest (*digest1'*) by applying a first cryptographic digest algorithm to the first secret number (*SN1*); and
- *validating (414)* the first data sequence (*DS1*) and the second data sequence (*DS2*) as being temporally related to each other when the first and second digital signatures (*DSIGN1, DSIGN2*) have been verified and when the generated second first digest (*digest1'*) matches the first digest (*digest1*)*.*

7. The method of claim 6, wherein the first data sequence (*DS1*) further comprises a second digest (*digest2*), wherein the second data sequence (*DS2*) further comprises a second secret number (*SN2*), and wherein the method further comprises:
- *generating (412)* a second second digest (*digest2'*) by applying a second cryptographic digest algorithm to the second secret number (*SN2*); and
- wherein the *validating (414)* of the first data sequence (*DS1*) and the second data sequence (*DS2*) as being temporally related to each other further requires that the generated second second digest (*digest2'*) matches the second digest (*digest2*).

8. The method of claim 6 or 7, wherein the *verifying (406)* of the first digital signature (*DSIGN1*) comprises:
verifying that the first digital signature (*DSIGN1*) is the result of applying a first cryptographic digital signature algorithm to the first data (*data1*), the first secret number (*SN1*) and when dependent on claim 8 also to the second digest (*digest2*); and wherein the *verifying (408)* of the second signature (*DSIGN2*) comprises:
verifying that the second digital signature (*DSIGN2*) is the result of applying a second cryptographic digital signature algorithm to the second data (*data2*), the first digest (*digest1*) and when dependent on claim 8 also to the second secret number (*SN2*).

9. A coupling system (500) for coupling a first data sequence and a second data sequence temporally related to each other to enable validation of the first data sequence and the second data sequence as being temporally related to each other, the system comprises:
- a first processing device (510) configured to process a first data sequence (*DS1*) captured from a monitored environment during a first time period and further being configured to:
- generate a first digital signature (*DSIGN1*) for the first data sequence (*DS1*) by applying a first cryptographic digital signature algorithm to:
first data (*data1*) of the first data sequence (*DS1*) and
a first secret number (*SN1*);
- incorporate the first secret number (*SN1*) and the first digital signature (*DSIGN1*) in the first data sequence (*DS1*); and
- transmit the first data sequence (*DS1*); and
- a second processing device (520) configured to process a second data sequence (*DS2*) different from the first data sequence (*DS1*) and captured from a monitored environment during a second time period at least partly overlapping with the first time period, wherein the first and second processing devices (510, 520) are different parts of a surveillance system (100) set up to synchronously in time generate a respective same first secret number (*SN1*), and wherein the second data sequence (*DS2*) is different from the first data sequence (*DS1*), and wherein the second processing device (520) further being configured to:
- generate a second digital signature (*DSIGN2*) for the second data sequence (*DS2*) by applying a second cryptographic digital signature algorithm to:
second data (*data2*) of the second data sequence (*DS2*) and
a first digest (*digest1*), wherein the first digest (*digest1*) is generated by the second processing device (520) applying a first cryptographic digest algorithm to the first secret number (*SN1*);
- incorporate the second digital signature (*DSIGN2*) and the first digest (*digest1*) in the second data sequence (*DS2*), whereby the first data sequence (*DS1*) and the second data sequence (*DS2*) are coupled by the first secret number (*SN1*) and the first digest (*digest1*); and
- transmit the second data sequence (*DS2*).

10. The coupling system (500) of claim 9, wherein the first and second processing devices (510, 520) are set up to synchronously in time generate a respective same second secret number (*SN2*), wherein the first processing device (510) is further configured to:
- generate the first digital signature (*DSIGN1*) based additionally on a second digest (*digest2*), which second digest (*digest2*) is generated by applying a second cryptographic digest algorithm to the second secret number (*SN2*), and
- incorporate the second digest (*digest2*) in the first data sequence (*DS1*); and wherein the second processing device (520) is further configured to:
- generate the second digital signature (*DSIGN2*) based additionally on the second secret number (*SN2*), and
- incorporate the second secret number (*SN2*) in the second data sequence (*DS2*).

11. The coupling system (500) of claim 9 or 10, wherein the first and second processing devices (510, 520) are different processing devices with synchronized clocks.

12. The coupling system (500) of any one of claims 9-11, wherein the first and second processing devices (510, 520) are comprised in a single device, such as in a single monitoring camera, or in two different devices, such as in two different monitoring cameras.

13. A validating device (600) for validating a first data sequence and a second data sequence as being temporally related to each other, the validating device is configured to:
- obtain a first data sequence (*DS1*) comprising first data (*data1*), a first secret number (*SN1*) and a first digital signature (*DSIGN1*);
- obtain a second data sequence (*DS2*) comprising second data (*data2*), a first digest (*digest1*) of the first secret number (*SN1*) and a second digital signature (*DSIGN2*);
- verify the first digital signature (*DSIGN1*);
- verify the second digital signature (*DSIGN2*);
- generate a second first digest (*digest1'*) by applying a first cryptographic digest algorithm to the first secret number (*SN1*); and
- validate the first data sequence (*DS1*) and the second data sequence (*DS2*) as being temporally related to each other when the first and second digital signatures (*DSIGN1, DSIGN2*) have been verified and when the generated second first digest (*digest1'*) matches the first digest (*digest1*).

14. The validating device (600) of claim 13, wherein the first data sequence (*DS1*) further comprises a second digest (*digest2*), wherein the second data sequence (*DS2*) further comprises a second secret number (*SN2*), and wherein the validating device is further configured to:
- generate a second second digest (*digest2'*) by applying a second cryptographic digest algorithm to the second secret number (*SN2*); and
- validate the first data sequence (*DS1*) and the second data sequence (*DS2*) as being temporally related to each other when also the generated second second digest (*digest2'*) matches the second digest (*digest2*).

## Patentansprüche

1. Verfahren zur Kopplung einer ersten Datensequenz und einer zweiten Datensequenz, die zeitlich zueinander in Beziehung stehen, um Validierung der ersten Datensequenz und der zweiten Datensequenz als zeitlich zueinander in Beziehung stehend zu ermöglichen, wobei das Verfahren Folgendes umfasst:
Verarbeiten einer ersten Datensequenz (DS1), die während eines ersten Zeitraums aus einer überwachten Umgebung erfasst wird, durch eine erste Verarbeitungsvorrichtung (510):
- Erzeugen (302) einer ersten digitalen Signatur (DSIGN1) für die erste Datensequenz (DS1) durch Anwenden eines ersten kryptografischen digitalen Signaturalgorithmus auf:
erste Daten (data1) der ersten Datensequenz (DS1) und eine erste geheime Zahl (SN1);
- Integrieren (304) der ersten geheimen Zahl (SN1) und der ersten digitalen Signatur (DSIGN1) in die erste Datensequenz (DS1); und
- Senden (306) der ersten Datensequenz (DS1);
Verarbeiten einer zweiten Datensequenz (DS2), die sich von der ersten Datensequenz (DS1) unterscheidet und während eines zweiten Zeitraums, der sich zumindest teilweise mit dem ersten Zeitraum überlappt, aus der überwachten Umgebung erfasst wird, durch eine zweite Verarbeitungsvorrichtung (520), wobei die erste und die zweite Verarbeitungsvorrichtung (510, 520) unterschiedliche Teile eines Überwachungssystems (100) und dazu eingerichtet sind, zeitlich synchron eine jeweilige gleiche erste geheime Zahl (SN1) zu erzeugen, und wobei sich die zweite Datensequenz (DS2) von der ersten Datensequenz (DS1) unterscheidet;
- Erzeugen (308) einer zweiten digitalen Signatur (DSIGN2) für die zweite Datensequenz (DS2) durch Anwenden eines zweiten kryptografischen digitalen Signaturalgorithmus auf:
zweite Daten (data2) der zweiten Datensequenz (DS2) und einen ersten Digest (digest1), wobei der erste Digest (digest1) durch die zweite Verarbeitungsvorrichtung (520) unter Anwendung eines ersten kryptografischen Digest-Algorithmus auf die erste geheime Zahl (SN1) erzeugt wird;
- Integrieren (310) der erzeugten zweiten digitalen Signatur (DSIGN2) und des ersten Digest (digest1) in die zweite Datensequenz (DS2), wobei die erste Datensequenz (DS1) und die zweite Datensequenz (DS2) durch die erste geheime Zahl (SN1) und den ersten Digest (digest1) gekoppelt werden; und
- Senden (312) der zweiten Datensequenz (DS2).

2. Verfahren nach Anspruch 1, wobei die erste und die zweite Verarbeitungsvorrichtung (510, 520) zeitlich synchron eine jeweilige gleiche zweite geheime Zahl (SN2) erzeugen, wobei die erste digitale Signatur (DSIGN1) ferner basierend auf einem zweiten Digest (digest2) erzeugt wird, wobei der zweite Digest (digest2) durch die erste Verarbeitungsvorrichtung (510) unter Anwendung eines zweiten kryptografischen Digest-Algorithmus auf die zweite geheime Zahl (SN2) erzeugt wird, wobei die zweite digitale Signatur (DSIGN2) ferner basierend auf der zweiten geheimen Zahl (SN2) erzeugt wird, wobei das Integrieren (304) der ersten geheimen Zahl (SN1) und der ersten digitalen Signatur (DSIGN1) in die erste Datensequenz (DS1) ferner Folgendes umfasst:
- Integrieren des zweiten Digest (digest2) in die erste Datensequenz (DS1); und wobei das Integrieren (310) der erzeugten zweiten digitalen Signatur (DSIGN2) und des ersten Digest (digest1) in die zweite Datensequenz (DS2) ferner Folgendes umfasst:
- Integrieren der zweiten geheimen Zahl (SN2) in die zweite Datensequenz (DS2).

3. Verfahren nach Anspruch 2, wobei die erste digitale Signatur (DSIGN1) durch die erste Verarbeitungsvorrichtung (510) unter Anwendung des ersten kryptografischen digitalen Signaturalgorithmus auf die ersten Daten (data1), die erste geheime Zahl (SN1) und auch auf den zweiten Digest (digest2) erzeugt wird; und wobei die zweite digitale Signatur (DSIGN2) durch die zweite Verarbeitungsvorrichtung (520) unter Anwendung des zweiten kryptografischen digitalen Signaturalgorithmus auf die zweiten Daten (data2), den ersten Digest (digest1) und auch auf die zweite geheime Zahl (SN2) erzeugt wird.

4. Verfahren nach einem der Ansprüche 1-3, wobei die erste und die zweite geheime Zahl (SN1, SN2) basierend auf einem jeweiligen Startwert und unter Verwendung eines jeweiligen kryptografisch sicheren Zahlengenerators (515, 525) erzeugt werden.

5. Verfahren nach Anspruch 4, wobei jede der ersten und der zweiten geheimen Zahl (SN1, SN2) ein einmaliges Kennwort, OTP, wie etwa ein zeitbasiertes OTP, TOTP, ist.

6. Verfahren zur Validierung einer ersten Datensequenz und einer zweiten Datensequenz als zeitlich zueinander in Beziehung stehend, wobei das Verfahren Folgendes umfasst:
- Erhalten (402) einer ersten Datensequenz (DS1), die erste Daten (data1), eine erste geheime Zahl (SN1) und eine erste digitale Signatur (DSIGN1) umfasst;
- Erhalten (404) einer zweiten Datensequenz (DS2), die zweite Daten (data2), einen ersten Digest (digest1) der ersten geheimen Zahl (SN1) und eine zweite digitale Signatur (DSIGN2) umfasst;
- Verifizieren (406) der ersten digitalen Signatur (DSIGN1);
- Verifizieren (408) der zweiten digitalen Signatur (DSIGN2);
- Erzeugen (410) eines zweiten ersten Digest (digest1') durch Anwenden eines ersten kryptographischen Digest-Algorithmus auf die erste geheime Zahl (SN1); und
- Validieren (414) der ersten Datensequenz (DS1) und der zweiten Datensequenz (DS2) als zeitlich zueinander in Beziehung stehend, wenn die erste und die zweite digitale Signatur (DSIGN1, DSIGN2) verifiziert wurden und wenn der erzeugte zweite erste Digest (digest1') mit dem ersten Digest (digest1) übereinstimmt.

7. Verfahren nach Anspruch 6, wobei die erste Datensequenz (DS1) ferner einen zweiten Digest (digest2) umfasst, wobei die zweite Datensequenz (DS2) ferner eine zweite geheime Zahl (SN2) umfasst und wobei das Verfahren ferner Folgendes umfasst:
- Erzeugen (412) eines zweiten zweiten Digest (digest2') durch Anwenden eines zweiten kryptographischen Digest-Algorithmus auf die zweite geheime Zahl (SN2); und
- wobei das Validieren (414) der ersten Datensequenz (DS1) und der zweiten Datensequenz (DS2) als zeitlich zueinander in Beziehung stehend ferner erfordert, dass der erzeugte zweite zweite Digest (digest2') mit dem zweiten Digest (digest2) übereinstimmt.

8. Verfahren nach Anspruch 6 oder 7, wobei das Verifizieren (406) der ersten digitalen Signatur (DSIGN1) Folgendes umfasst:
Verifizieren, dass die erste digitale Signatur (DSIGN1) das Ergebnis des Anwendens eines ersten kryptografischen digitalen Signaturalgorithmus auf die ersten Daten (data1), die erste geheime Zahl (SN1) und bei Abhängigkeit von Anspruch 8 auch auf den zweiten Digest (digest2) ist; und wobei das Verifizieren (408) der zweiten Signatur (DSIGN2) Folgendes umfasst:
Verifizieren, dass die zweite digitale Signatur (DSIGN2) das Ergebnis des Anwendens eines zweiten kryptografischen digitalen Signaturalgorithmus auf die zweiten Daten (data2), den ersten Digest (digest1) und bei Abhängigkeit von Anspruch 8 auch auf die zweite geheime Zahl (SN2) ist.

9. Kopplungssystem (500) zum Koppeln einer ersten Datensequenz und einer zweiten Datensequenz, die zeitlich zueinander in Beziehung stehen, um Validierung der ersten Datensequenz und der zweiten Datensequenz als zeitlich zueinander in Beziehung stehend zu ermöglichen, wobei das System Folgendes umfasst:
- eine erste Verarbeitungsvorrichtung (510), die dazu ausgelegt ist, eine erste Datensequenz (DS1) zu verarbeiten, die während eines ersten Zeitraums aus einer überwachten Umgebung erfasst wurde, und ferner zu Folgendem ausgelegt ist:
- Erzeugen einer ersten digitalen Signatur (DSIGN1) für die erste Datensequenz (DS1) durch Anwenden eines ersten kryptografischen digitalen Signaturalgorithmus auf:
erste Daten (data1) der ersten Datensequenz (DS1) und
eine erste geheime Zahl (SN1);
- Integrieren der ersten geheimen Zahl (SN1) und der ersten digitalen Signatur (DSIGN1) in die erste Datensequenz (DS1); und
- Senden der ersten Datensequenz (DS1); und
- eine zweite Verarbeitungsvorrichtung (520), die dazu ausgelegt ist, eine zweite Datensequenz (DS2) zu verarbeiten, die sich von der ersten Datensequenz (DS1) unterscheidet und während eines zweiten Zeitraums, der sich zumindest teilweise mit dem ersten Zeitraum überlappt, aus der überwachten Umgebung erfasst wird, wobei die erste und die zweite Verarbeitungsvorrichtung (510, 520) unterschiedliche Teile eines Überwachungssystems (100) und dazu eingerichtet sind, zeitlich synchron eine jeweilige gleiche erste geheime Zahl (SN1) zu erzeugen, und wobei sich die zweite Datensequenz (DS2) von der ersten Datensequenz (DS1) unterscheidet, und wobei die zweite Verarbeitungsvorrichtung (520) ferner zu Folgendem ausgelegt ist:
- Erzeugen einer zweiten digitalen Signatur (DSIGN2) für die zweite Datensequenz (DS2) durch Anwenden eines zweiten kryptografischen digitalen Signaturalgorithmus auf:
zweite Daten (data2) der zweiten Datensequenz (DS2) und einen ersten Digest (digest1), wobei der erste Digest (digest1) durch die zweite Verarbeitungsvorrichtung (520) unter Anwendung eines ersten kryptografischen Digest-Algorithmus auf die erste geheime Zahl (SN1) erzeugt wird;
- Integrieren der zweiten digitalen Signatur (DSIGN2) und des ersten Digest (digest1) in die zweite Datensequenz (DS2), wobei die erste Datensequenz (DS1) und die zweite Datensequenz (DS2) durch die erste geheime Zahl (SN1) und den ersten Digest (digest1) gekoppelt werden; und
- Senden der zweiten Datensequenz (DS2).

10. Kopplungssystem (500) nach Anspruch 9, wobei die erste und die zweite Verarbeitungsvorrichtung (510, 520) dazu eingerichtet sind, zeitlich synchron eine jeweilige gleiche zweite geheime Zahl (SN2) zu erzeugen, wobei die erste Verarbeitungsvorrichtung (510) ferner zu Folgendem ausgelegt ist:
- Erzeugen der ersten digitalen Signatur (DSIGN1) zusätzlich basierend auf einem zweiten Digest (digest2), wobei der zweite Digest (digest2) durch Anwenden eines zweiten kryptografischen Digest-Algorithmus auf die zweite geheime Zahl (SN2) erzeugt wird, und
- Integrieren des zweiten Digest (digest2) in die erste Datensequenz (DS1); und wobei die zweite Verarbeitungsvorrichtung (520) ferner zu Folgendem ausgelegt ist:
- Erzeugen der zweiten digitalen Signatur (DSIGN2) zusätzlich basierend auf der zweiten geheimen Zahl (SN2), und
- Integrieren der zweiten geheimen Zahl (SN2) in die zweite Datensequenz (DS2).

11. Kopplungssystem (500) nach Anspruch 9 oder 10, wobei die erste und die zweite Verarbeitungsvorrichtung (510, 520) unterschiedliche Verarbeitungsvorrichtungen mit synchronisierten Takten sind.

12. Kopplungssystem (500) nach einem der Ansprüche 9-11, wobei die erste und die zweite Verarbeitungsvorrichtung (510, 520) in einer einzigen Vorrichtung, wie etwa in einer einzigen Überwachungskamera, oder in zwei verschiedenen Vorrichtungen, wie etwa in zwei verschiedenen Überwachungskameras, umfasst sind.

13. Validierungsvorrichtung (600) zum Validieren einer ersten Datensequenz und einer zweiten Datensequenz als zeitlich zueinander in Beziehung stehend, wobei die Validierungsvorrichtung zu Folgendem ausgelegt ist:
- Erhalten einer ersten Datensequenz (DS1), die erste Daten (data1), eine erste geheime Zahl (SN1) und eine erste digitale Signatur (DSIGN1) umfasst;
- Erhalten einer zweiten Datensequenz (DS2), die zweite Daten (data2), einen ersten Digest (digest1) der ersten geheimen Zahl (SN1) und eine zweite digitale Signatur (DSIGN2) umfasst;
- Verifizieren der ersten digitalen Signatur (DSIGN1);
- Verifizieren der zweiten digitalen Signatur (DSIGN2);
- Erzeugen eines zweiten ersten Digest (digest1') durch Anwenden eines ersten kryptografischen Digest-Algorithmus auf die erste geheime Zahl (SN1); und
- Validieren der ersten Datensequenz (DS1) und der zweiten Datensequenz (DS2) als zeitlich zueinander in Beziehung stehend, wenn die erste und die zweite digitale Signatur (DSIGN1, DSIGN2) verifiziert wurden und wenn der erzeugte zweite erste Digest (digest1') mit dem ersten Digest (digest1) übereinstimmt.

14. Validierungsvorrichtung (600) nach Anspruch 13, wobei die erste Datensequenz (DS1) ferner einen zweiten Digest (digest2) umfasst, wobei die zweite Datensequenz (DS2) ferner eine zweite geheime Zahl (SN2) umfasst und wobei die Validierungsvorrichtung ferner zu Folgendem ausgelegt ist:
- Erzeugen eines zweiten zweiten Digest (digest2') durch Anwenden eines zweiten kryptografischen Digest-Algorithmus auf die zweite geheime Zahl (SN2); und
- Validieren der ersten Datensequenz (DS1) und der zweiten Datensequenz (DS2) als zeitlich zueinander in Beziehung stehend, wenn auch der erzeugte zweite zweite Digest (digest2') mit dem zweiten Digest (digest2) übereinstimmt.

## Revendications

1. Procédé de couplage d'une première séquence de données et d'une deuxième séquence de données liées temporellement l'une à l'autre afin de permettre la validation de la première séquence de données et de la deuxième séquence de données comme étant liées temporellement l'une à l'autre, le procédé comprenant les étapes suivantes :
par un premier dispositif de traitement (510) traitant une première séquence de données (DS1) capturée dans un environnement surveillé pendant une première période temporelle :
- générer (302) une première signature numérique (DSIGN1) pour la première séquence de données (DS1) en appliquant un premier algorithme cryptographique de signature numérique :
aux premières données (data1) de la première séquence de données (DS1) et à un premier nombre secret (SN1) ;
- incorporer (304) le premier nombre secret (SN1) et la première signature numérique (DSIGN1) dans la première séquence de données (DS1) ; et
- émettre (306) la première séquence de données (DS1) ;
par un deuxième dispositif de traitement (520), traiter une deuxième séquence de données (DS2) différente de la première séquence de données (DS1) et capturée à partir de l'environnement surveillé pendant une deuxième période de temps chevauchant au moins partiellement la première période de temps, les premier et deuxième dispositifs de traitement (510, 520) étant des parties différentes d'un système de surveillance (100) et configurés pour générer de manière synchrone dans le temps un même premier nombre secret respectif (SN1), et où la deuxième séquence de données (DS2) est différente de la première séquence de données (DS1) :
- générer (308) une deuxième signature numérique (DSIGN2) pour la deuxième séquence de données (DS2) en appliquant un deuxième algorithme cryptographique de signature numérique :
aux deuxièmes données (data2) de la deuxième séquence de données (DS2), et
à un premier condensé (digest1), où le premier condensé (digest1) est généré par le deuxième dispositif de traitement (520) appliquant un premier algorithme de condensé cryptographique au premier nombre secret (SN1) ;
- incorporer (310) la deuxième signature numérique générée (DSIGN2) et le premier condensé (digest1) dans la deuxième séquence de données (DS2), moyennant quoi la première séquence de données (DS1) et la deuxième séquence de données (DS2) sont couplées par le premier nombre secret (SN1) et le premier condensé (digest1) ;
et
- transmettre (312) la deuxième séquence de données (DS2).

2. Procédé selon la revendication 1, dans lequel les premier et deuxième dispositifs de traitement (510, 520) génèrent de manière synchrone dans le temps un même deuxième nombre secret respectif (SN2), où la première signature numérique (DSIGN1) est en outre générée sur la base d'un deuxième condensé (digest2), lequel deuxième condensé (digest2) est généré par le premier dispositif de traitement (510) appliquant un deuxième algorithme de condensé cryptographique au deuxième nombre secret (SN2), où la deuxième signature numérique (DSIGN2) est en outre générée sur la base du deuxième nombre secret (SN2), où l'incorporation (304) du premier nombre secret (SN1) et de la première signature numérique (DSIGN1) dans la première séquence de données (DS1) comprend en outre :
- l'incorporation du deuxième condensé (digest2) dans la première séquence de données (DS1) ; et où l'incorporation (310) de la deuxième signature numérique (DSIGN2) générée et du premier condensé (digest1) dans la deuxième séquence de données (DS2) comprend en outre :
- l'incorporation du deuxième nombre secret (SN2) dans la deuxième séquence de données (DS2).

3. Procédé selon la revendication 2, dans lequel la première signature numérique (DSIGN1) est générée par le premier dispositif de traitement (510) appliquant le premier algorithme de signature numérique cryptographique aux premières données (data1), au premier nombre secret (SN1) et également au deuxième condensé (digest2) ; et où la deuxième signature numérique (DSIGN2) est générée par le deuxième dispositif de traitement (520) appliquant le deuxième algorithme de signature numérique cryptographique aux deuxième données (data2), au premier condensé (digest1), et également au deuxième nombre secret (SN2).

4. Procédé selon l'une quelconque des revendications 1 à 3, dans lequel les premier et deuxième nombres secrets (SN1, SN2) sont générés sur la base d'une valeur initiale respective et en utilisant un générateur respectif de nombres sécurisé par cryptographie (515, 525).

5. Procédé selon la revendication 4, dans lequel chacun des premier et deuxième nombres secrets (SN1, SN2) est un mot de passe à usage unique, OTP, tel qu'un OTP basé sur le temps, TOTP.

6. Procédé de validation d'une première séquence de données et d'une deuxième séquence de données comme étant en relation temporelle l'une avec l'autre, le procédé comprenant les étapes suivantes :
- obtenir (402) une première séquence de données (DS1) comprenant des premières données (data1), un premier nombre secret (SN1) et une première signature numérique (DSIGN1) ;
- obtenir (404) une deuxième séquence de données (DS2) comprenant des deuxièmes données (data2), un premier condensé (digest1) du premier nombre secret (SN1) et une deuxième signature numérique (DSIGN2) ;
- vérifier (406) la première signature numérique (DSIGN1) ;
- vérifier (408) la deuxième signature numérique (DSIGN2) ;
- générer (410) un deuxième premier condensé (digest1') en appliquant un premier algorithme cryptographique de condensé au premier nombre secret (SN1) ; et
- valider (414) la première séquence de données (DS1) et la deuxième séquence de données (DS2) comme étant temporellement liées l'une à l'autre lorsque les première et deuxième signatures numériques (DSIGN1, DSIGN2) ont été vérifiées et lorsque le deuxième premier condensé généré (digest1') correspond au premier condensé (digest1).

7. Procédé selon la revendication 6, dans lequel la première séquence de données (DS1) comprend en outre un deuxième condensé (digest2), où la deuxième séquence de données (DS2) comprend en outre un deuxième nombre secret (SN2), et où le procédé comprend en outre :
- la génération (412) d'un deuxième deuxième condensé (digest2') en appliquant un deuxième algorithme cryptographique de condensé au deuxième nombre secret (SN2) ; et
- dans lequel la validation (414) de la première séquence de données (DS1) et de la deuxième séquence de données (DS2) comme étant liées temporellement l'une à l'autre, nécessite en outre que le deuxième deuxième condensé (digest2') généré corresponde au deuxième condensé (digest2).

8. Procédé selon la revendication 6 ou la revendication 7, dans lequel la vérification (406) de la première signature numérique (DSIGN1) comprend :
la vérification que la première signature numérique (DSIGN1) est le résultat de l'application d'un premier algorithme de signature numérique cryptographique aux première données (data1), au premier nombre secret (SN1) et, lorsqu'il dépend de la revendication 8, également au deuxième condensé (digest2) ; où la vérification (408) de la deuxième signature (DSIGN2) comprend :
la vérification que la deuxième signature numérique (DSIGN2) est le résultat de l'application d'un deuxième algorithme cryptographique de signature numérique aux deuxièmes données (data2), au premier condensé (digest1) et, lorsqu'il dépend de la revendication 8, également au deuxième nombre secret (SN2).

9. Système de couplage (500) permettant de coupler une première séquence de données et une deuxième séquence de données liées temporellement l'une à l'autre afin de permettre la validation de la première séquence de données et de la deuxième séquence de données comme étant liées temporellement l'une à l'autre, le système comprenant :
- un premier dispositif de traitement (510) configuré pour traiter une première séquence de données (DS1) capturée dans un environnement surveillé pendant une première période de temps et étant en outre configuré pour :
- générer une première signature numérique (DSIGN1) pour la première séquence de données (DS1) en appliquant un premier algorithme cryptographique de signature numérique :
aux premières données (data1) de la première séquence de données (DS1), et
à un premier nombre secret (SN1) ;
- incorporer le premier nombre secret (SN1) et la première signature numérique (DSIGN1) dans la première séquence de données (DS1) ; et
- transmettre la première séquence de données (DS1) ; et
- un deuxième dispositif de traitement (520) configuré pour traiter une deuxième séquence de données (DS2) différente de la première séquence de données (DS1) et capturée dans un environnement surveillé pendant une deuxième période de temps chevauchant au moins partiellement la première période de temps, les premier et deuxième dispositifs de traitement (510, 520) étant des parties différentes d'un système de surveillance (100) mis en place pour générer de manière synchrone dans le temps un même premier nombre secret (SN1) respectif, et où la deuxième séquence de données (DS2) est différente de la première séquence de données (DS1), et où le deuxième dispositif de traitement (520) est en outre configuré pour :
- générer une deuxième signature numérique (DSIGN2) pour la deuxième séquence de données (DS2) en appliquant un deuxième algorithme cryptographique de signature numérique :
aux deuxièmes données (data2) de la deuxième séquence de données (DS2), et
à un premier condensé (digest1), où le premier condensé (digest1) est généré par le deuxième dispositif de traitement (520) appliquant un premier algorithme de condensé cryptographique au premier nombre secret (SN1) ;
- incorporer la deuxième signature numérique (DSIGN2) et le premier condensé (digest1) dans la deuxième séquence de données (DS2), moyennant quoi la première séquence de données (DS1) et la deuxième séquence de données (DS2) sont couplées par le premier nombre secret (SN1) et le premier condensé (digest1) ; et
- transmettre la deuxième séquence de données (DS2).

10. Système de couplage (500) selon la revendication 9, dans lequel les premier et deuxième dispositifs de traitement (510, 520) sont configurés pour générer de manière synchrone dans le temps un même deuxième nombre secret respectif (SN2), où le premier dispositif de traitement (510) est en outre configuré pour :
- générer la première signature numérique (DSIGN1) basée en plus sur un deuxième condensé (digest2), lequel deuxième condensé (digest2) est généré par application d'un deuxième algorithme cryptographique de condensé au deuxième nombre secret (SN2), et
- incorporer le deuxième condensé (digest2) dans la première séquence de données (DS1) ; où le deuxième dispositif de traitement (520) est en outre configuré pour :
- générer la deuxième signature numérique (DSIGN2) sur la base, en plus, du deuxième nombre secret (SN2), et
- incorporer le deuxième nombre secret (SN2) dans la deuxième séquence de données (DS2).

11. Système de couplage (500) selon la revendication 9 ou la revendication 10, dans lequel les premier et deuxième dispositifs de traitement (510, 520) sont des dispositifs de traitement différents ayant des horloges synchronisées.

12. Système de couplage (500) selon l'une quelconque des revendications 9 à 11, dans lequel les premier et deuxième dispositifs de traitement (510, 520) sont compris dans un dispositif unique, tel que dans une caméra de surveillance unique, ou dans deux dispositifs différents, tels que dans deux caméras de surveillance différentes.

13. Dispositif de validation (600) pour valider une première séquence de données et une deuxième séquence de données comme étant liées temporellement l'une à l'autre, le dispositif de validation étant configuré pour :
- obtenir une première séquence de données (DS1) comprenant des premières données (data1), un premier nombre secret (SN1) et une première signature numérique (DSIGN1) ;
- obtenir une deuxième séquence de données (DS2) comprenant des deuxièmes données (data2), un premier condensé (digest1) du premier numéro secret (SN1) et une deuxième signature numérique (DSIGN2) ;
- vérifier la première signature numérique (DSIGN1) ;
- vérifier la deuxième signature numérique (DSIGN2) ;
- générer un deuxième premier condensé (digest1') en appliquant un premier algorithme cryptographique de condensé au premier nombre secret (SN1) ; et
- valider la première séquence de données (DS1) et la deuxième séquence de données (DS2) comme étant temporellement liées l'une à l'autre lorsque les première et deuxième signatures numériques (DSIGN1, DSIGN2) ont été vérifiées et lorsque le deuxième premier condensé généré (digest1') correspond au premier condensé (digest1).

14. Dispositif de validation (600) selon la revendication 13, dans lequel la première séquence de données (DS1) comprend en outre un deuxième condensé (digest2), où la deuxième séquence de données (DS2) comprend en outre un deuxième nombre secret (SN2), et où le dispositif de validation est en outre configuré pour :
- générer un deuxième deuxième condensé (digest2') en appliquant un deuxième algorithme cryptographique de condensé au deuxième nombre secret (SN2) ; et
- valider la première séquence de données (DS1) et la deuxième séquence de données (DS2) comme étant temporellement liées l'une à l'autre lorsque le deuxième deuxième condensé généré (digest2') correspond également au deuxième condensé (digest2).
